(19) Europäisches Patentamt
European Patent Office
Office européen des brevets

(11) **EP 1 898 651 B1**

(12) **EUROPEAN PATENT SPECIFICATION**

(45) Date of publication and mention of the grant of the patent:
**12.11.2014 Bulletin 2014/46**

(51) Int Cl.:
***H04N 13/04*** *(2006.01)* ***G02F 1/1335*** *(2006.01)*
***G02B 27/22*** *(2006.01)*

(21) Application number: **07017290.3**

(22) Date of filing: **04.09.2007**

(54) **Electrooptical device and electronic apparatus**

Elektrooptische Vorrichtung und elektronisches Gerät

Dispositif électro-optique et appareil électronique

(84) Designated Contracting States:
**DE FR GB**

(30) Priority: **06.09.2006 JP 2006241119**

(43) Date of publication of application:
**12.03.2008 Bulletin 2008/11**

(73) Proprietor: **Japan Display West Inc.**
**Aichi-ken, 470-2102 (JP)**

(72) Inventor: **Maeda, Tsuyoshi**
**Suwa-shi**
**Nagano-ken 392-8502 (JP)**

(74) Representative: **Ealey, Douglas Ralph et al**
**D Young & Co LLP**
**120 Holborn**
**London EC1N 2DY (GB)**

(56) References cited:
**GB-A- 2 422 737**
**JP-A- 2005 077 707**
**JP-A- 2005 165 228**
**US-B1- 6 809 787**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 898 651 B1

Printed by Jouve, 75001 PARIS (FR)

## Description

### BACKGROUND

1. Technical Field

The present invention relates to an electrooptical device and an electronic apparatus that simultaneously display two images in different directions.

2. Related Art

An electrooptical device that can simultaneously display two images in different directions is known. In this electrooptical device, a light-shielding barrier layer having apertures is provided on a display panel such as a liquid crystal panel. Japanese Patent No. 2,857,429 discloses a three-dimensional image display device that can perform three-dimensional display with two images.

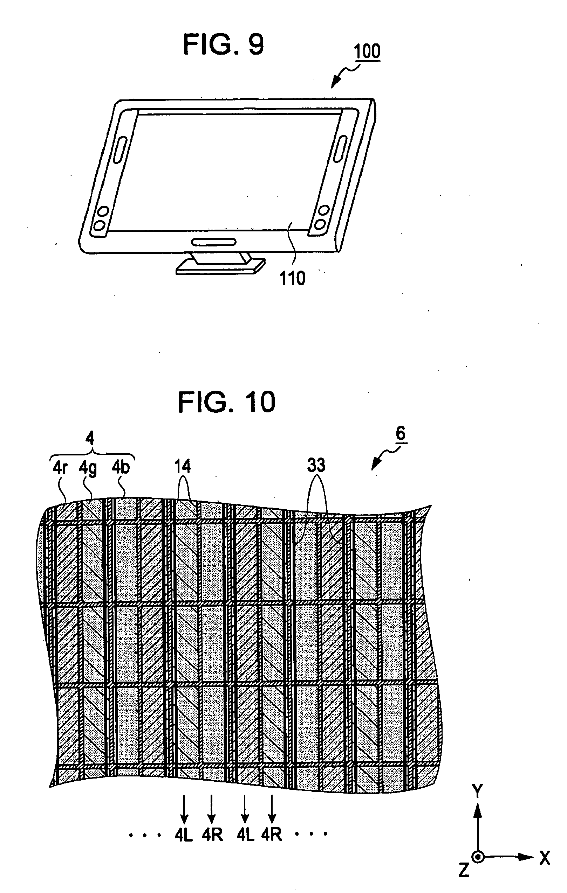

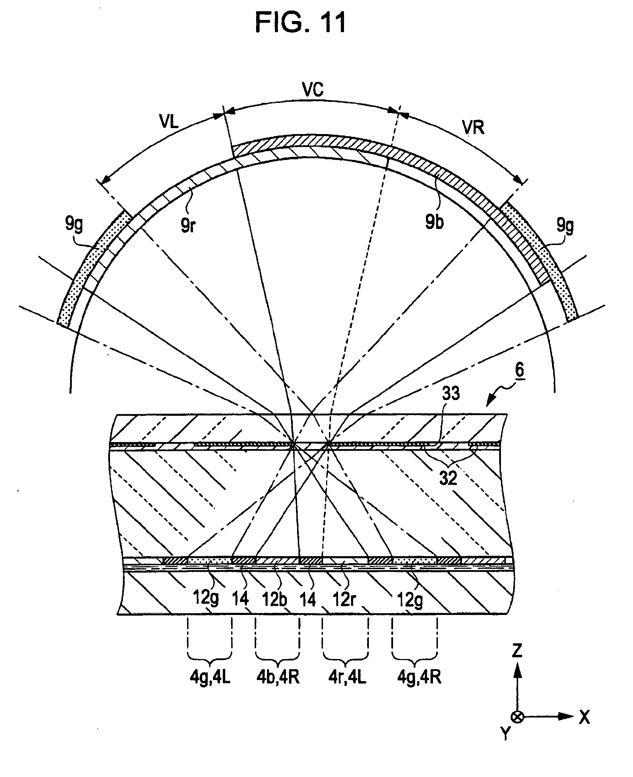

Two images can be viewed by different viewers. FIG. 10 is an enlarged plan view of a liquid crystal device 6 serving an electrooptical device for such two-screen display. The liquid crystal device 6 includes pixels 4r, 4g, and 4b arranged in matrix and configured to perform red, green, and blue displays with color filters 12r, 12g, and 12b (FIG. 11), and light-shielding portions 14 that separate the pixels 4r, 4g, and 4b. The width of the light-shielding portions 14 is substantially constant. Each of the pixels 4r, 4g, and 4b also functions as one of a pixel 4L for displaying a first image and a pixel 4R for displaying a second image. The liquid crystal device 6 further includes a barrier layer 32 (FIG. 11) having apertures 33 provided between the right ends of the pixels 4R and the left ends of the pixels 4L.

In FIG. 10, hatched portions represent regions in which the barrier layer 32 is provided. The width of the apertures 33 is slightly larger than the width of the light-shielding portions 14.

FIG. 11 shows a cross-sectional structure of the liquid crystal device 6 having the above-described configuration in conjunction with the relationship between the viewing angle and the display viewed at the viewing angle. In FIG. 11, attention is paid to light passing through an aperture 33 provided between a pixel 4b (pixel 4R) and a pixel 4r (pixel 4L). Display light from the pixel 4r passes through the aperture 33, and is viewed in an angle range 9r. Similarly, display light from pixels 4g and 4b is viewed in angle ranges 9g and 9b. As a result, only display light from the pixel 4r is viewed in the angle range VL on the left side of the front, and only display light from the pixel 4b is viewed in the angle range VR on the right side of the front. In other words, only a first image corresponding to the pixel 4L is viewed in the angle range VL, and only a second image corresponding to the pixel 4R is viewed in the angle range VR. In this way, the liquid crystal device 6 can display two different images in the angle ranges VL and VR.

In an angle range VC between the angle ranges VL and VR, a mixture of a first image and a second image is displayed. In order to reduce this mixed region in which display images are mixed, the width of the apertures 33 of the barrier layer 32 needs to be close to the width of the light-shielding portions 14.

However, when the front mixed region is reduced by decreasing the width of the apertures 33, the amount of display light passing through the apertures 33 is reduced. As a result, display brightness in the angle ranges VL and VR is decreased.

GB 2 422 737 A pertains to a multiple-view display and a display controller.

### SUMMARY

An advantage of some aspects of the invention is that a front mixed region in which display images are mixed is reduced or removed while ensuring display brightness of a first image and a second image.

An electrooptical device according the invention simultaneously displays a first image and a second image in different directions. The electrooptical device includes a display panel including a plurality of pixel rows in each of which first pixels for displaying the first image, first light-shielding portions, second pixels for displaying the second image, and second light-shielding portions wider than the first light-shielding portions are repetitively arranged in that order; a light-transmissive substrate provided parallel to the display panel; and a light-shielding barrier layer provided on the substrate.

The barrier layer includes apertures that coincide with the second light-shielding portions, as viewed from a normal direction of the display panel.

When it is assumed that a side on which the first pixel is adjacent to the second light-shielding portion is a right side, and a side on which the second pixel is adjacent to the second light-shielding portion is a left side, a viewer views a display on the electrooptical device in the following manner. First, when viewed from a direction inclined rightward from the normal direction of the display panel, a first pixel is blocked by the barrier layer, but is not viewed, and a second pixel is viewed through the aperture. Conversely, when viewed from a direction inclined leftward from the normal direction of the display panel, the second pixel is blocked by the barrier layer, but is not viewed, and the first pixel is viewed through the aperture. That is, when the viewer recognizes the second image when viewing the electrooptical device from an obliquely right direction, and recognizes the first image when viewing the electrooptical device from an obliquely left direction.

The width of the second light-shielding portions in the direction of the pixel row is larger than that of the first light-shielding portions, and the barrier layer has apertures that coincide with the second light-shielding portions. Therefore, the apertures of the barrier layer also have a large width substantially equivalent to the width of the second light-shielding portions. For this reason, more light can be obtained from the apertures and higher display brightness can be achieved than in a case in which the width of the second light-shielding portions is equal to that of the first light-shielding portions. Further, by setting the width of the apertures to be slightly larger than the width of the second light-shielding portions, a mixed region in which a first image and a second image are mixed can be reduced while ensuring display brightness of the first and second images.

Preferably, the first pixels, the first light-shielding portions, the second pixels, and the second light-shielding portions are arranged to form respective stripes in a direction orthogonal to the pixel rows.

The electrooptical device further includes switching elements provided in the first pixels and the second pixels, and data lines connected to the switching elements. Preferably, the data lines coincide with the second light-shielding portions, as viewed from the normal direction of the display panel.

With the above-described configuration, the data lines are covered with the second light-shielding portions, but are not viewed. Further, since the data lines do not coincide with the first light-shielding portions, the width of the first light-shielding portions can be reduced without exposing the data lines. This can increase the aperture ratio and can increase display brightness.

Preferably, in a direction orthogonal to the pixel rows, the first light-shielding portions and the second light-shielding portions in the pixel rows are alternately arranged and the first pixels and the second pixels in the pixel rows are alternately arranged.

In this case, the first pixels, the first light-shielding portions, the second pixels, the second light-shielding portions, and the aperture of the barrier layer are respectively arranged obliquely. Consequently, the arrangement pitches of the first pixels and the second pixels each for displaying the same color in the direction of the pixel rows can be made shorter than in a case in which the first pixels and the second pixels are arranged in stripes. Therefore, display resolution can be increased.

The width of the apertures of the light-shielding barrier layer in the direction of the pixel rows is smaller than or equal to the width of the second light-shielding portions in the direction of the pixel rows.

This can remove a front region in which the first image and the second image are mixed. In this case, the widths of the second light-shielding portions and the apertures of the barrier layer are larger than the width of the first light-shielding portions. Therefore, the first image and the second image can be displayed with high brightness in directions inclined rightward and leftward from the front.

An electronic apparatus according to another aspect of the invention includes the above-described electrooptical device in a display section. This allows the electronic apparatus to display a first image and a second image in different directions with high brightness.

## BRIEF DESCRIPTION OF THE DRAWINGS

The invention will be described with reference to the accompanying drawings, wherein like numbers reference like elements.

FIG. 1 is an enlarged plan view of a liquid crystal device according to a first exemplary embodiment of the invention.

FIG. 2 is a cross-sectional view of the liquid crystal device shown in FIG. 1.

FIG. 3A is an enlarged plan view of a liquid crystal panel.

FIG. 3B is an enlarged plan view of a barrier mask substrate.

FIG. 4 is an explanatory view showing the cross-sectional structure of the liquid crystal device shown in FIG. 1 in conjunction with the relationship between the viewing angle and the display viewed at the viewing angle.

FIG. 5 is an enlarged plan view of a liquid crystal device according to a second exemplary embodiment of the invention.

FIG. 6A is an enlarged plan view of a liquid crystal panel.

FIG. 6B is an enlarged plan view of a barrier mask substrate.

FIG. 7 is an enlarged plan view of a liquid crystal device according to a third exemplary embodiment of the invention.

FIG. 8 is an explanatory view showing the cross-sectional structure of the liquid crystal device shown in FIG. 7 in conjunction with the relationship between the viewing angle and the display viewed at the viewing angle.

FIG. 9 is a perspective view of a display device for use in a car navigation system.

FIG. 10 is an enlarged plan view of a known liquid crystal device.

FIG. 11 is an explanatory view showing the cross-sectional structure of the liquid crystal device shown in FIG. 10 in conjunction with the relationship between the viewing angle and the display viewed at the viewing angle.

## DESCRIPTION OF EXEMPLARY EMBODIMENTS

Exemplary embodiments of the invention will be described below with reference to the drawings. Through the drawings, the dimensions and ratios of components are appropriately made different from actual dimensions and ratios in order to make the components more easily recognized in the drawings.

### First Exemplary Embodiment

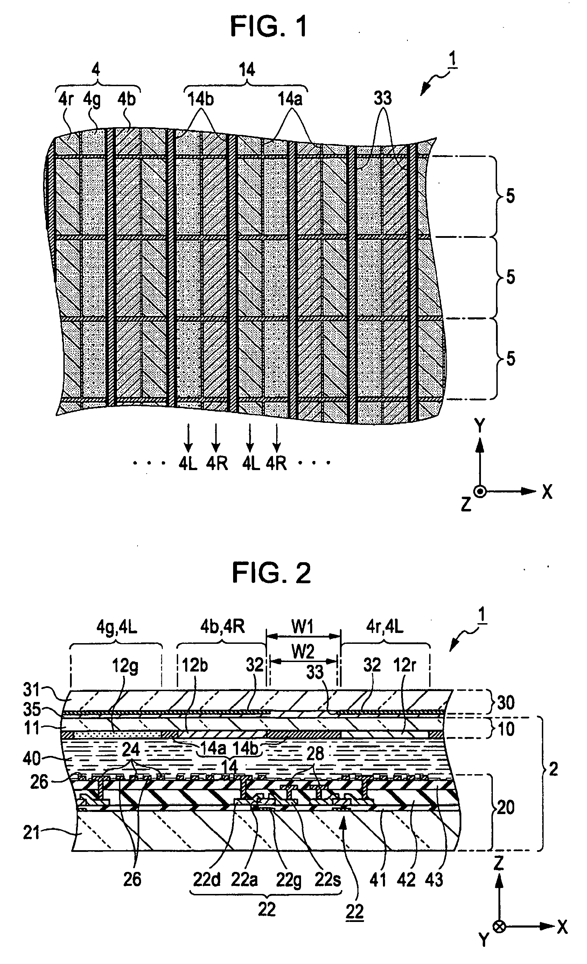

FIG. 1 is an enlarged plan view of a liquid crystal device 1 serving as an electrooptical device according to a first exemplary embodiment of the invention. FIG. 2 is a cross-sectional view of the liquid crystal device 1 shown in FIG. 1. As shown in FIG. 2, the liquid crystal device 1 includes a liquid crystal panel 2 serving as a display panel, and a barrier mask substrate 30 bonded to the liquid crystal panel 2 with adhesive 35. The barrier mask substrate 30 includes a glass substrate 31, and a light-shielding barrier layer 32 provided on a surface of the glass substrate 31 facing the liquid crystal panel 2. The glass substrate 31 is disposed parallel to the liquid crystal panel 2. The barrier layer 32 is formed of a black resin layer having apertures 33.

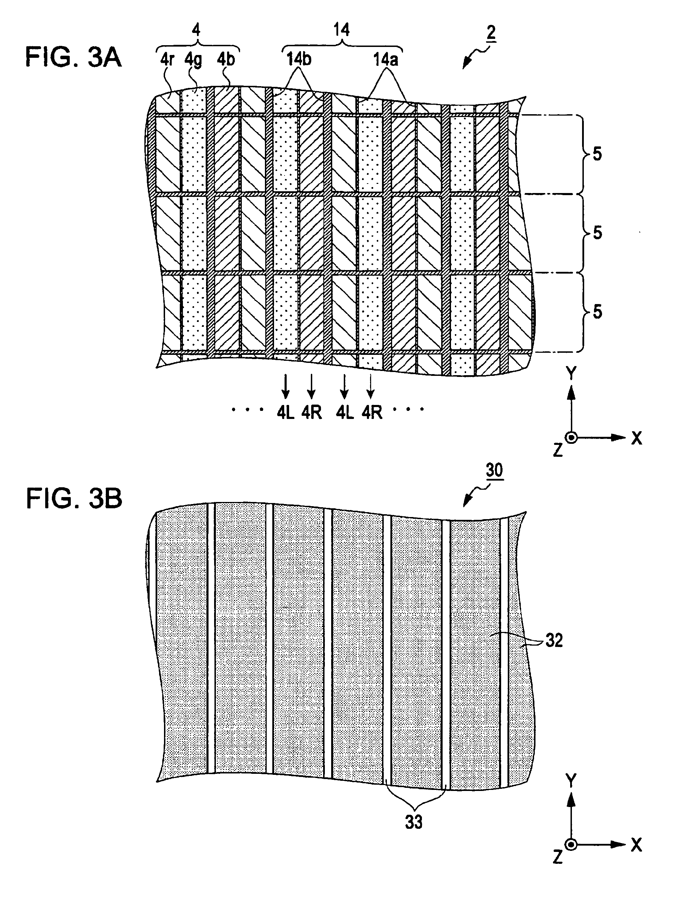

FIGS. 3A and 3B are enlarged plan views, respectively, of the liquid crystal panel 2 and the barrier mask substrate 30 before bonding. The liquid crystal panel 2 and the barrier mask substrate 30 are bonded to form the liquid crystal device 1 shown in FIG. 1. Hatched portions in FIG. 1 show regions in which the barrier layer 32 of the barrier mask substrate 30 is provided.

As shown in FIG. 3A, the liquid crystal panel 2 includes rectangular pixels 4r, 4g, and 4b (hereinafter also generically referred to as "pixels 4") that are arranged in a matrix corresponding to red, green, and blue displays.

The pixels 4r, 4g, and 4b are repetitively arranged in that order in the X-axis direction, and are arranged in the Y-axis direction such that pixels of the same color form stripes. Light-shielding layers 14 are provided between the adjacent pixels 4. The light-shielding layers 14 include light-shielding layers 14a and 14b that will be described below.

Each pixel 4 contributes to display of a first image or a second image. Pixels 4 for displaying a first image are also referred to as pixels 4L, and pixels 4 for displaying a second image are also referred to as pixels 4R. The pixels 4L and 4R respectively correspond to the first pixels and the second pixels in the invention. In the first exemplary embodiment, the pixels 4R and 4R are alternately arranged in the X-axis direction, and are arranged to form stripes in the Y-axis direction.

**[0039]** - Rows of pixels 4 extending in the X-axis direction are referred to as pixel rows 5. Each pixel row 5 includes a plurality of units repetitively arranged. In each unit, a pixel 4L, a light-shielding layer 14a serving as a first light-shielding portion, a pixel 4R, and a light-shielding layer 14b serving as a second light-shielding portion are arranged in that order. Considering only the pixels 4L and 4R, the pixels 4L and 4R are alternately and repetitively arranged. Considering only the light-shielding layers 14a and 14b, the light-shielding layers 14a and 14b are alternately and repetitively arranged. The width of the light-shielding layers 14b in the X-axis direction is larger than that of the light-shielding layers 14a. In the first exemplary embodiment, the light-shielding layers 14a are 10 μm in thickness, and the light-shielding layers 14b are 25 μm in thickness.

As shown in FIG. 3B, the barrier layer 32 of the barrier mask substrate 30 includes apertures 33 that coincide with the light-shielding layers 14b, as viewed from the normal direction of the liquid crystal panel 2. The width of the apertures 33 is slightly smaller than that of the light-shielding layers 14b. In the first exemplary embodiment, the apertures 33 are 23 μm in thickness.

Referring to FIG. 2, a detailed description will be given below of the configuration of the liquid crystal device 1 in which the liquid crystal panel 2 shown in FIG. 3A and the barrier mask substrate 30 shown in FIG. 3B are bonded (that is, in a state shown in FIG. 1).

The liquid crystal panel 2 includes an element substrate 20 and a counter substrate 10 opposing each other, and liquid crystal 40 sealed between the element substrate 20 and the counter substrate 10. The element substrate 20 includes a glass substrate 21 serving as a base material, and the counter substrate 10 includes a glass substrate 11 serving as a base material.

The element substrate 20 is a so-called TFT element substrate, and includes TFT (thin film transistor) elements 22 serving as switching elements corresponding to the respective pixels 4, gate lines (not shown) connected to the TFT elements 22, data lines 28, and pixel electrodes 24. First to fourth layers are stacked on a surface of the glass substrate 21 facing the liquid crystal 40. In order to prevent a short circuit between the components provided on the layers, an interlayer insulating layer 41 is provided between the first layer and the second layer, an interlayer insulating layer 42 is provided between the second layer and the third layer, and an interlayer insulating layer 43 is provided between the third layer and the fourth layer.

While the TFT elements 22 are of a three-terminal type in the first exemplary embodiment, they can be replaced with two-terminal TFD (thin film diode) elements.

Gate electrodes 22g of the TFT elements 22 are provided in the first layer provided on the surface of the glass substrate 21.

The second layer is provided on the first layer such that the interlayer insulating layer 41 formed of $SiO_2$ or SiN is disposed therebetween. Semiconductor layers 22a of amorphous silicon are provided in the second layer such as to overlap with the gate electrodes 22g. Source electrodes 22s are provided in source regions of the semiconductor layers 22a, and drain electrodes 22d are provided in drain regions of the semiconductor layers 22a. The source electrodes 22s and the drain electrodes 22d overlap with each other. The source electrodes 22s are connected to the data lines 28. One semiconductor layer 22a, one source electrode 22s, one drain electrode 22d, and one gate electrode 22g constitute one TFT element 22. The TFT element 22 overlaps with the light-shielding layer 14b of the pixel 4, or is provided near the light-shielding layer 14b, as viewed from the normal direction of the liquid crystal panel 2. Therefore, the TFT element 22 is not provided near the light-shielding layer 14a, as viewed from the normal direction of the liquid crystal panel 2.

The third layer is provided on the second layer such that the interlayer insulating layer 42 formed of, for

example, $SiO_2$ or SiN is disposed therebetween. The data lines 28 are provided in the third layer, and are connected to the source electrodes 22s of the TFT elements 22 via contact holes provided in the interlayer insulating layer 42.

The data lines 28 coincide with the light-shielding layers 14b, as viewed from the normal direction of the liquid crystal panel 2. Therefore, the data lines 28 do not coincide with the relatively narrow light-shielding layers 14a. With this structure, the width of the light-shielding layers 14a can be reduced while the data lines 28 are not exposed, as viewed from the normal direction of the liquid crystal panel 2. This decreases the aperture ratio of the liquid crystal panel 2, and increases display brightness.

The fourth layer is provided on the third layer such that the interlayer insulating layer 43 formed of, for example, $SiO_2$ or SiN is disposed therebetween. In the fourth layer, a light-transmissive pixel electrode 24 formed of ITO (indium tin oxide) and a common electrode 26 are provided corresponding to each pixel 4. The pixel electrode 24 is connected to the drain electrode 22d of the TFT element 22 via a contact hole provided through the interlayer insulating layers 42 and 43. An image signal is supplied from the data line 28 to the pixel electrode 24 via the TFT element 22. The common electrode 26 is connected to a constant potential line (not shown) so as to have a constant potential.

The pixel electrode 24 and the common electrode 26 are comb-shaped and are arranged such that teeth thereof alternate with each other in parallel. The liquid crystal 40 sealed between the element substrate 20 and the counter substrate 10 is driven by a transverse electric field produced between the pixel electrode 24 and the common electrode 26, and the aligning direction of liquid crystal molecules changes in a plane parallel to the glass substrate 21. This liquid crystal mode is called IPS (in-plane switching). In this mode, a wide viewing angle can be obtained because the liquid crystal molecules are constantly driven parallel to the glass substrate 21. An alignment film formed of polyimide (not shown) is provided on a surface of the fourth layer.

Color filters 12r, 12g, and 12b (hereinafter also generically referred to as color filters 12) are provided corresponding to the respective pixels 4 on a surface of the glass substrate 11 of the counter substrate 10 facing the liquid crystal 40. The light-shielding layers 14 (including the light-shielding layers 14a and 14b) formed of black resin are provided in the same layer as that of the color filters 12. The width W1 of the light-shielding layers 14b in the pixel row direction is larger than the width W2 of the apertures 33 of the barrier layer 32 in the barrier mask substrate 30 in the pixel row direction. The color filters 12 are formed of a resin that absorbs a component of incident light having a specific wavelength. Light (that is, display light) can have predetermined colors (e.g., red, green, and blue) by passing through the color filters 12r, 12g, and 12b. An alignment film (not shown) formed of polyimide is provided on the color filters 12. An overcoat formed of a light-transmissive resin can also be provided on the color filters 12.

The glass substrate 11 is processed by chemical etching or CMP (chemical mechanical polishing) so that it has a thickness of approximately 50 μm. By this processing, the distance between the color filter 12, from which display light is substantially emitted, and the aperture 33 of the barrier layer 32 is adjusted. As a result, the angle of an optical path extending from the color filter 12 to the aperture 32 is adjusted. This allows the liquid crystal device 1 to display a first image and a second image at proper angles.

The above-described barrier mask substrate 30 is bonded on a surface of the glass substrate 11 opposite to the liquid crystal 40 with the adhesive 35. An overcoat formed of a light-transmissive resin can be provided on a surface of the barrier layer 32 in the barrier mask substrate 30 in order to protect the barrier layer 32 before bonding.

A polarizing plate (not shown) is bonded to an outer side of each of the glass substrates 21 and 31. Transmission axes of the polarizing plates are orthogonal to each other. A backlight (not shown) for emitting light in the Z-axis direction is provided on the outer side of the glass substrate 21.

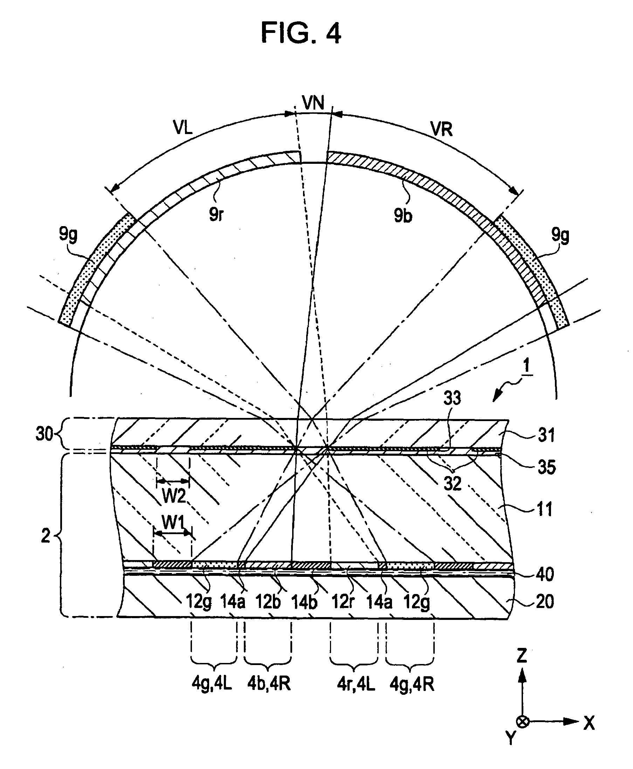

FIG. 4 shows a cross-sectional structure of the liquid crystal device 1 having the above-described configuration in conjunction with relationship between the viewing angle and the display viewed at the viewing angle. In FIG. 4, attention is paid to light passing through an aperture 33 provided between a pixel 4b (pixel 4R) and a pixel 4r (pixel 4L). Light passing through the other apertures 33 also behaves in the manner shown in FIG. 4. For convenience of explanation of the optical path, the glass substrate 11 is shown with a larger thickness, and the components of the element substrate 20 are omitted.

Display light from the pixel 4r passes through the aperture 33, is refracted by the surface of the glass substrate 31, and is then viewed in an angle range 9r. Similarly, display light from the pixel 4g and display light from the pixel 4b are respectively viewed in angle ranges 9g and 9b. The angle range 9r and the angle range 9g overlap with each other, and the angle range 9b and the angle range 9g overlap with each other.

As a result, in an angle range VL on the left side of the front, display light from the pixel 4b is blocked by the barrier layer 32, but is not viewed, and only display light from the pixel 4r is viewed. In an angle range VR on the right side of the front, display light from the pixel 4r is blocked by the barrier layer 32, but is not viewed, and only display light from the pixel 4b is viewed. In other words, only a first image corresponding to the pixel 4L is viewed in the angle range VL, and only a second image corresponding to the pixel 4R is viewed in the angle range VR. In this way, the liquid crystal device 1 can display two different images in the angle ranges VL and VR. The angle ranges VL and VR are approximately 30°.

In the first exemplary embodiment, a mixed region in which both the first and second images are displayed is not provided on the front side between the angle ranges VL and VR. This is because the width W2 of the apertures 33 in the pixel row direction is smaller than the width W1 of the light-shielding portions 14b in the pixel row direction. Alternatively, an angle range VN in which none of the first and second images is displayed is provided at the front. In the angle range VN, the viewer recognizes that black display is produced.

Even when the width of the apertures 33 is thus reduced to remove the mixed region, since the widths of the light-shielding layers 14b and the apertures 33 are larger than the width of the light-shielding layers 14a, the apertures 33 are wide enough to transmit much display light. For this reason, the first image and the second image can be displayed with high brightness in the angle ranges VL and VR. Further, since the light-shielding layers 14a are not aimed to cover the data lines 28, for example, they can be made thinner than the light-shielding layers 14 of the known liquid crystal device 6 shown in FIG. 10. Therefore, even when the width of the light-shielding layers 14b is increased, the aperture ratio can be maintained or increased, and the first image and the second image can be displayed with high brightness. In this way, the liquid crystal device 1 according to the first exemplary embodiment can display different images with high brightness in the angle ranges VL and VR while removing the front mixed region.

Second Exemplary Embodiment

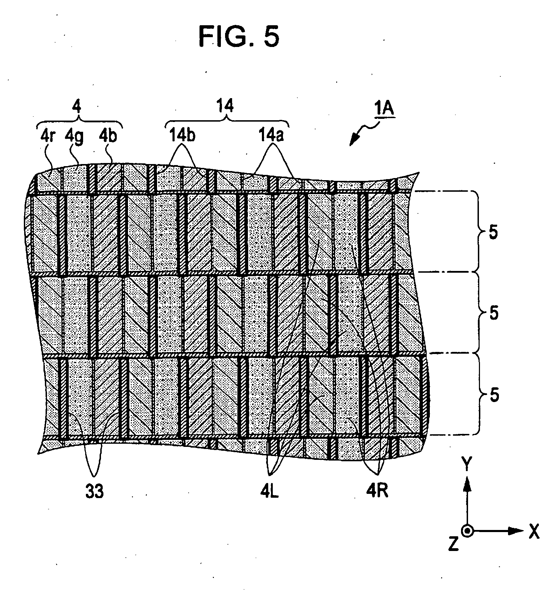

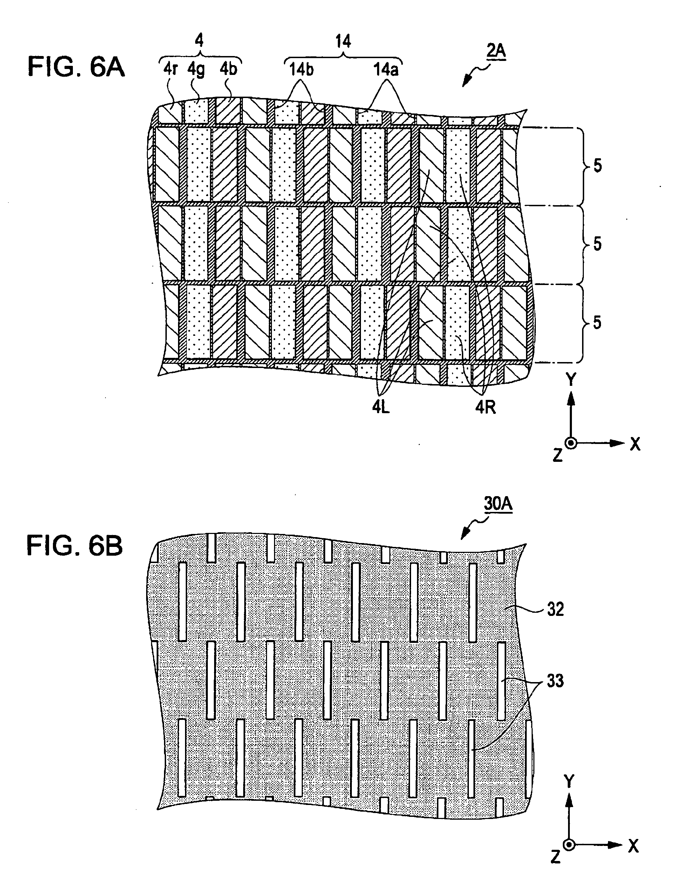

A liquid crystal device 1A according to a second exemplary embodiment of the invention will now be described with reference to FIGS. 5 and 6. The liquid crystal device 1A is different from the liquid crystal device 1 of the first exemplary embodiment in the arrangement of pixels 4L, 4R, light-shielding layers 14a and 14b, and apertures 33. Since other structures are similar to those in the liquid crystal device 1, the following description will center on differences. In FIGS. 5 and 6, the same components as those in the first exemplary embodiment shown in FIGS. 1 and 3 are denoted by the same reference numerals, and descriptions thereof are omitted.

FIG. 5 is an enlarged plan view of the liquid crystal device 1A according to the second exemplary embodiment. Similarly to the liquid crystal device 1 of the first exemplary embodiment, the liquid crystal device 1A includes a liquid crystal panel 2A serving as a display panel and a barrier mask substrate 30A that are bonded together with adhesive 35. FIGS. 6A and 6B are enlarged plan views, respectively, of the liquid crystal panel 2A and the barrier mask substrate 30A before bonding. Hatched portions in FIG. 5 represent a region where a barrier layer 32 of the barrier mask substrate 30A is provided.

As shown in FIG. 6A, the liquid crystal panel 2A includes rectangular pixels 4r, 4g, and 4b respectively for red, green, and blue displays. The pixels 4r, 4g, and 4b are repetitively arranged in that order in the X-axis direction, and are arranged in the Y-axis direction such that pixels 4 of the same color form stripes. Light-shielding layers 14 (including light-shielding layers 14a and 14b) are provided between the adjacent pixels 4.

The pixels 4 include pixels 4L for displaying a first image and pixels 4R for displaying a second image. In the second exemplary embodiment, the pixels 4L and 4R are alternately arranged in the X-axis direction, and are also alternately arranged in the Y-axis direction orthogonal to the X-axis direction.

In each pixel row 5 extending in the X-axis direction, units each including a pixel 4L, a light-shielding layer 14a, a pixel 4R, and a light-shielding layer 14b arranged in that order are provided repetitively. The light-shielding layer 14b is wider than the light-shielding layer 14a in the X-axis direction. In the second exemplary embodiment, the light-shielding layer 14a is 10 μm in thickness, and the light-shielding layer 14b is 25 μm in thickness.

The above-described arrangement order of the components in the X-axis direction applies to all pixel rows 5. In contrast, the units of the components are shifted by a half pitch between the adjacent pixel rows 5. That is, in the direction (Y-axis direction) orthogonal to the pixel rows 5, the light-shielding layers 14a and the light-shielding layers 14b are alternately arranged, and the pixels 4L and the pixels 4R are alternately arranged.

Correspondingly, as shown in FIG. 6B, the positions of the apertures 33 provided in the barrier layer 32 of the barrier mask substrate 30A are different from those in the liquid crystal device 1 of the first exemplary embodiment. The apertures 33 are provided so as to coincide with the light-shielding layers 14b, as viewed from the normal direction of the liquid crystal panel 2A. Therefore, in the second exemplary embodiment, the apertures 33 are shifted by a half pitch between the pixel rows 5 in accordance with the arrangement pattern of the light-shielding layers 14b. In other words, slit-shaped apertures 33 having a length substantially equal to the width of the pixel rows 5 in the Y-axis direction are arranged obliquely. This barrier layer 32 is also called a step barrier. The width of the apertures 33 is slightly smaller than the width of the light-shielding layers 14b, and is set at 23 μm in the second exemplary embodiment.

In the liquid crystal device 1A having this step barrier 32, the distance between two closest pixels among the pixels 4L for displaying the same color is V2 times the distance in the normal liquid crystal device that does not perform two-screen display. Therefore, display resolution is $1/\sqrt{2}$ times that in the normal liquid crystal device. This characteristic also applies to the pixels 4R. In contrast, when the pixels 4L and 4R are arranged in stripes, as in the liquid crystal device 1 of the first exemplary embodiment, resolution is half that in the normal liquid crystal device. Therefore, resolution can be increased by V2 times by adopting the configuration of the second exemplary embodiment.

The cross-sectional structure of the liquid crystal device 1A, and the relationship between the viewing angle and the display viewed at the viewing angle are similar to those adopted in the liquid crystal device 1 of the first exemplary embodiment, and are shown in FIG. 4. Therefore, the liquid crystal device 1A of the second exemplary embodiment can also display different images with high brightness in the angle ranges VL and VR while removing a front mixed region.

Third Exemplary Embodiment

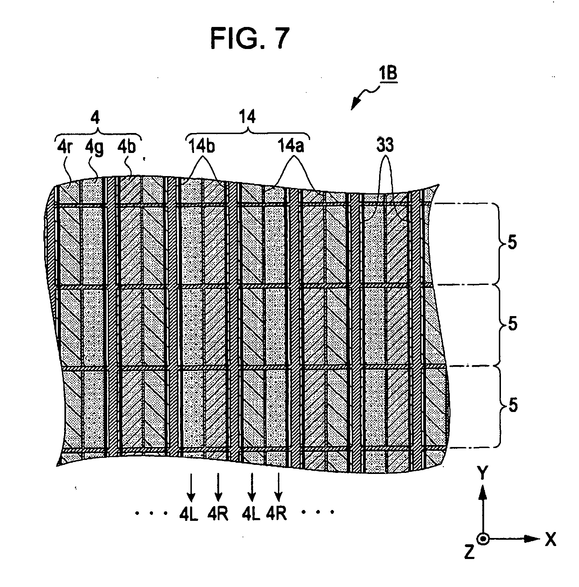

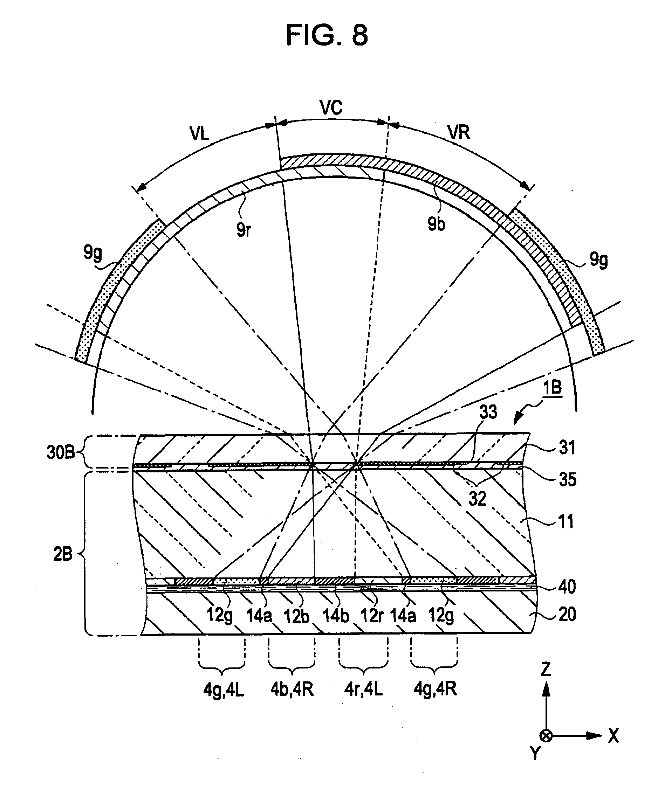

A liquid crystal device 1B according to a third exemplary embodiment of the invention will now be described with reference to FIGS. 7 and 8. The liquid crystal device 1B is different from the liquid crystal device 1 of the first exemplary embodiment in the width of apertures 33 provided in a barrier layer 32. Since other structures are similar to those in the liquid crystal device 1, the following description will center on differences. In FIGS. 7 and 8, the same components as those in the first exemplary embodiments shown in FIGS. 1 and 4 are denoted by the same reference numerals, and descriptions thereof are omitted.

FIG. 7 is an enlarged plan view of the liquid crystal device 1B according to the third exemplary embodiment. Similarly to the liquid crystal device 1, the liquid crystal device 1B includes a liquid crystal panel 2B serving as a display panel and a barrier mask substrate 30B that are bonded together with adhesive 35, as shown in FIG. 8. Hatched portions in FIG. 7 represent regions where the barrier layer 32 of the barrier mask substrate 30B is provided. As shown in FIG. 7, the width of apertures 33 in the barrier layer 32 is slightly larger than the width of light-shielding layers 14b. In the third exemplary embodiment, the apertures 33 are 25 $\mu$m in thickness, the light-shielding layers 14b are 23 $\mu$m in thickness, and light-shielding layers 14a are 10 $\mu$m in thickness.

FIG. 8 shows a cross-sectional structure of the liquid crystal device 1B having the above-described configuration in conjunction with the viewing angle and the display viewed at the viewing angle. Display light from a pixel 4r passes through an aperture 33, is refracted by a surface of a glass substrate 31, and is viewed in an angle range 9r. Similarly, display light from pixels 4g and 4b is viewed in angle ranges 9g and 9b. The angle range 9r and the angle range 9b overlap with each other, the angle range 9r and the angle range 9g overlap with each other, and the angle range 9b and the angle range 9g overlap with each other.

As a result, in an angle range VL on the left side of the front, display light from the pixel 4b is blocked by the barrier layer 32, but is not viewed, and only display light from the pixel 4r is viewed. In an angle range VR on the right side of the front, display light from the pixel 4r is blocked by the barrier layer 32, but is not viewed, and only display light from the pixel 4b is viewed. In other words, only a first image corresponding to a pixel 4L is viewed in the angle range VL, and only a second image corresponding to a pixel 4R is viewed in the angle range VR. In this way, the liquid crystal device 1B can display two different images in the angle ranges VL and VR. The angle ranges VL and VR are approximately 30°.

Unlike the first exemplary embodiment, in a front angle range VC between the angle ranges VL and VR, display light from both the pixel 4r and the pixel 4b is viewed. That is, the angle range VC serves as a mixed region in which both the first image and the second image are displayed. This is because the width of the apertures 33 in the pixel row direction is larger than that of the light-shielding layers 14b. However, the angle range VC is limited to approximately 15° by forming a small difference between the width of the apertures 33 and the width of the light-shielding layers 14b. Since the angle range VC is approximately 30° in the known liquid crystal device 6 shown in FIG. 11, the mixed region in the third exemplary embodiment is narrower, and this gives little uncomfortable feeling to the viewer. By thus forming the mixed region at the front, display brightness of the first and second images in the angle ranges VL and VR can be increased further. In particular, brightness can be prevented from decreasing at the angles close to the front in the angle ranges VL and VR. Mounting Examples in Electronic Apparatuses

For example, the above-described liquid crystal device 1 (including the liquid crystal devices 1A and 1B, this also applies to the following description) can be mounted in a display device 100 for a car navigation system serving as an electronic apparatus shown in FIG. 9. The display device 100 can display two images in different directions with high brightness on the liquid crystal device 1 incorporated in a display section 110. For example, the display device 100 can display a map image on the driver's side, and a movie image on the front passenger's side.

The liquid crystal device 1 according to the exemplary embodiments of the invention can be applied not only to the above-described display device 100, but also to various electronic apparatuses such as a mobile computer, a digital camera, a digital video camera, car-mounted equipment, and audio equipment.

While the exemplary embodiments of the invention have been described above, various modifications can be made to the embodiments without departing from the scope of the invention. The following modifications are conceivable. First Modification

While the electronic apparatuses according to the embodiments of the invention are applied to the liquid crystal devices, they can be applied to various electrooptical devices that perform display according to electrical signals. For example, the barrier mask substrate 30 can be bonded to a display panel such as an organic EL (electro luminescence) display, a PDP (plasma display panel), or a CRT (cathode-ray tube) display.

Second Modification

While the barrier mask substrate 30 is provided on the viewer side of the liquid crystal panel 2 in the above-described exemplary embodiments, it can be provided on the back side of the liquid crystal panel 2, that is, between the liquid crystal panel 2 and the backlight. This structure also allows two-screen display with high brightness.

Third Modification

While IPS is used as the liquid crystal mode in the above-described exemplary embodiments, the liquid crystal mode is not limited thereto. Instead of IPS, various liquid crystal modes such as FFS (fringe field switching), VA (vertical alignment), TN (twisted nematic), and STN (super twisted nematic) modes can be used. However, since two images are displayed in directions at angles to the front, it is preferable to select IPS, FFS, or VA that permits a wide viewing angle.

**Claims**

1. An electrooptical device (1) configured to simultaneously display a first image and a second image in different directions, the electrooptical device comprising:

    a display panel (2) including a plurality of pixel rows (5) in each of which first pixels (4L) for displaying the first image, first light-shielding portions (14a), second pixels (4R) for displaying the second image, and second light-shielding portions (14b) are repetitively arranged in that order, the second light-shielding portions (14b) being wider than the first light-shielding portions (14a);
    a light-transmissive substrate (31) provided parallel to the display panel; and
    a light-shielding barrier layer (32) provided on the substrate (31), the barrier layer including apertures (33) that coincide with the second light-shielding portions, as viewed from a normal direction of the display panel;
    **characterized in that** the width (W2) of the apertures (33) of the light-shielding barrier layer in the direction of the pixel rows is smaller than or equal to the width (W1) of the second light-shielding portions in the direction of the pixel rows.

2. The electrooptical device according to claim 1, wherein the first pixels, the first light-shielding portions, the second pixels, and the second light-shielding portions are arranged to form respective stripes (4L, 4R) in a direction orthogonal to the pixel rows.

3. The electrooptical device according to claim 1 or 2, further comprising:

    switching elements (22) provided in the first pixels and the second pixels; and
    data lines (28) connected to the switching elements, the data lines coinciding with the second light-shielding portions, as viewed from the normal direction of the display panel.

4. The electrooptical device according to any one of the preceding claims, wherein, in a direction orthogonal to the pixel rows, the first light-shielding portions and the second light-shielding portions in the pixel rows are alternately arranged and the first pixels and the second pixels in the pixel rows are alternately arranged.

5. An electronic apparatus comprising the electrooptical device according to claim 1 in a display section.

**Patentansprüche**

1. Elektrooptische Vorrichtung (1), die konfiguriert ist zum gleichzeitigen Anzeigen eines ersten Bilds und eines zweiten Bilds in verschiedenen Richtungen, wobei die elektrooptische Vorrichtung Folgendes umfasst:

    eine Anzeigepaneele (2) mit mehreren Pixelzeilen (5) in denen jeweils erste Pixel (4L) zum Anzeigen des ersten Bilds, erste Lichtabschirmungsabschnitte (14a), zweite Pixel (4R) zum Anzeigen des zweiten Bilds und zweite Lichtabschirmungsabschnitte (14b) in dieser Reihenfolge wiederholend angeordnet sind, wobei die zweiten Lichtabschirmungsabschnitte (14b) breiter sind als die ersten Lichtabschirmungsabschnitte (14a);
    ein lichtdurchlässiges Substrat (31), das parallel zur Anzeigepaneele vorgesehen ist; und
    eine Lichtabschirmungsbarrierenschicht (32), die auf dem Substrat (31) vorgesehen ist, wobei die Barrierenschicht Öffnungen (33) enthält, die mit den zweiten Lichtabschirmungsabschnitten bei Betrachtung aus einer normalen Richtung der Anzeigepaneele übereinstimmen;
    **dadurch gekennzeichnet, dass** die Breite (W2) der Öffnungen (33) der Lichtabschirmungsbarrierenschicht in der Richtung der Pixelzeilen kleiner oder gleich der Breite (W1) der zweiten Lichtabschirmungsabschnitte in der Richtung der Pixelzeilen ist.

2. Elektrooptische Vorrichtung nach Anspruch 1, wobei die ersten Pixel, die ersten Lichtabschirmungsabschnitte, die zweiten Pixel und die zweiten Lichtabschirmungsabschnitte so angeordnet sind, dass sie jeweilige Streifen (4L, 4R) in einer Richtung orthogonal zu den Pixelzeilen bilden.

3. Elektrooptische Vorrichtung nach Anspruch 1 oder 2, die weiterhin Folgendes umfasst:

   Schaltelemente (22), die in den ersten Pixeln und den zweiten Pixeln vorgesehen sind; und
   Datenleitungen (28), die mit den Schaltelementen verbunden sind, wobei die Datenleitungen mit den zweiten Lichtabschirmungsabschnitten bei Betrachtung aus der normalen Richtung der Anzeigepaneele übereinstimmen.

4. Elektrooptische Vorrichtung nach einem der vorhergehenden Ansprüche, wobei in einer Richtung orthogonal zu den Pixelzeilen die ersten Lichtabschirmungsabschnitte und die zweiten Lichtabschirmungsabschnitte in den Pixelzeilen abwechselnd angeordnet sind und die ersten Pixel und die zweiten Pixel in den Pixelzeilen abwechselnd angeordnet sind.

5. Elektronisches Gerät, das die elektrooptische Vorrichtung nach Anspruch 1 in einem Anzeigeabschnitt umfasst.

## Revendications

1. Dispositif électrooptique (1) configuré pour afficher simultanément une première image et une deuxième image dans des directions différentes, le dispositif électrooptique comprenant :

   un panneau d'affichage (2) comportant une pluralité de rangées de pixels (5) dans chacune desquelles des premiers pixels (4L) pour afficher la première image, des premières portions pare-lumière (14a), des deuxièmes pixels (4R) pour afficher la deuxième image et des deuxièmes portions pare-lumière (14b) sont disposés de façon répétée dans cet ordre, les deuxièmes portions pare-lumière (14b) étant plus larges que les premières portions pare-lumière (14a) ;
   un substrat transmettant la lumière (31) disposé parallèlement au panneau d'affichage ; et
   une couche barrière pare-lumière (32) disposée sur le substrat (31), la couche barrière comportant des ouvertures (33) qui coïncident avec les deuxièmes portions pare-lumière, comme visualisé depuis une direction normale au panneau d'affichage ;
   **caractérisé en ce que** la largeur (W2) des ouvertures (33) de la couche barrière pare-lumière dans la direction des rangées de pixels est inférieure ou égale à la largeur (W1) des deuxièmes portions pare-lumière dans la direction des rangées de pixels.

2. Dispositif électrooptique selon la revendication 1, dans lequel les premiers pixels, les premières portions pare-lumière, les deuxièmes pixels et les deuxièmes portions pare-lumière sont disposés pour former des bandes respectives (4L, 4R) dans une direction orthogonale aux rangées de pixels.

3. Dispositif électrooptique selon la revendication 1 ou 2, comprenant en outre :

   des éléments de commutation (22) disposés dans les premiers pixels et les deuxièmes pixels ; et
   des lignes de données (28) reliées aux éléments de commutation, les lignes de données coïncidant avec les deuxièmes portions pare-lumière, comme visualisé depuis la direction normale au panneau d'affichage.

4. Dispositif électrooptique selon l'une quelconque des revendications précédentes dans lequel, dans une direction orthogonale aux rangées de pixels, les premières portions pare-lumière et les deuxièmes portions pare-lumière dans les rangées de pixels sont disposées tour à tour et les premiers pixels et les deuxièmes pixels dans les rangées de pixels sont disposés tour à tour.

5. Appareil électronique comprenant le dispositif électrooptique selon la revendication 1 dans une section d'affichage.

FIG. 1

FIG. 2

FIG. 3A
4
4r
4g
4b
14
14b
14a
2
5
5
5
· · · 4L 4R 4L 4R · · ·
Y
Z
X
FIG. 3B
30
32
33
Y
Z
X

FIG. 4

VN
VL
VR
9r
9b
9g
9g
1
33
30
31
35
32
W2
11
2
W1
40
12g 14a 12b 14b 12r 14a 12g
20
4g,4L 4b,4R 4r,4L 4g,4R
Z
Y
X

4
14
1A
4r 4g 4b
14b
14a
5
5
5
33
4L
4R
Y
X
Z

4
4r 4g 4b
14
14b 14a
2A
5
5
5
4L 4R
Y
X
Z

FIG. 6A

FIG. 6B

FIG. 7

1B
4
4r
4g
4b
14
14b
14a
33
5
5
5
4L
4R
4L
4R
Y
X
Z

# FIG. 8

VC
VL
VR
9r
9b
9g
9g
1B
33
30B
31
35
32
11
2B
40
12g
14a
12b
14b
12r
14a
12g
20
4g,4L
4b,4R
4r,4L
4g,4R
Z
X
Y

FIG. 9

100
110

FIG. 10

4
4r
4g
4b
14
33
6
· · · 4L 4R 4L 4R · · ·
Y
X
Z

FIG. 11

VC
VL
VR
9g
9r
9b
9g
6
33
32
12g
14
12b
14
12r
12g
4g,4L
4b,4R
4r,4L
4g,4R
Z
X
Y

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2857429 B
- GB 2422737 A